# EUROPEAN PATENT APPLICATION

(11) **EP 3 023 744 A1**
(43) Date of publication of application: **25.05.2016**
(21) Application number: 15195645.5
(22) Date of filing: 20.11.2015
(51) Int. Cl.: G01D 5/14, B60T 7/00, G01D 11/24

(54) **ROTATION ANGLE DETECTING DEVICE**

(30) Priority: 20.11.2014 JP 2014235397
(71) Applicant: AISIN SEIKI KABUSHIKI KAISHA, Kariya-shi, Aichi-ken 448-8650 (JP)
(72) Inventor: MIWA, Takahiro, KARIYA-SHI, AICHI-KEN, 448-8650 (JP); MATSUO, Toshiyuki, KARIYA-SHI, AICHI-KEN, 448-8650 (JP)
(74) Representative: Intès, Didier Gérard André

(57) **Abstract**

A rotation angle detecting device, provided with a magnet member (20) placed in a shaft member (2) to face a magneto-electric conversion element (10) and detecting a rotation angle of the shaft member in response to a relative rotation of the magnet member with respect to the magneto-electric conversion element, includes: a housing (1) accommodating the magneto-electric conversion element; a supporting member (3) connected to the housing and rotatably supporting the shaft member; and a connector member (5) electrically connected to the magneto-electric conversion element, wherein the housing includes a main body portion (1 a) where an element chamber (SC) accommodating at least the magneto-electric conversion element is formed and a joint (1 b) integrally formed with the main body portion and connected to the connector member, and the connector member is fitted into and connected to the joint in a liquid-tight manner.

## Description

### TECHNICAL FIELD

This disclosure relates to a rotation angle detecting device and, more particularly, to a rotation angle detecting device that detects a rotation angle of a shaft member in response to a relative rotation of a magnet member with respect to a magneto-electric conversion element.

### BACKGROUND DISCUSSION

A non-contact rotation angle detecting device has been known in the prior art. The non-contact rotation angle detecting device detects a rotation angle of a shaft member in order to detect an operation amount of a brake pedal of a car or the like. The non-contact rotation angle detecting device has, for example, a magnet member that is placed in the shaft member to face a magneto-electric conversion element and is configured to detect the rotation angle of the shaft member in response to a relative rotation of the magnet member with respect to the magneto-electric conversion element. As an example, JP 2007-139458A (Reference 1) discloses a "rotation angle detecting device that is provided with a housing which is provided with a magnetic sensor, a pivoting member which is provided with a magnet facing the magnetic sensor and is pivotable with respect to the housing, and a shaft member which is operated to pivot with an operated member, and is configured to be capable of detecting an oscillation angle of the operated member based on a change in an output signal from the magnetic sensor which rotates relative to the magnet" (described in Paragraph [0001] of Reference 1).

JP 2007-93280A (Reference 2) discloses a "rotation angle sensor that rotates a radially magnetized disk magnet to sense a horizontal magnetic field which is generated by the disk magnet with X and Y magneto-electric conversion elements placed at right angles to each other and obtains a rotation angle from output values of the X and Y magneto-electric conversion elements" (described in Paragraph [0016] of Reference 2), in which Hall elements are used as the magneto-electric conversion elements (described in Paragraph [0020]).

For the purpose of "providing a rotation angle detecting device with rotation angle detection accuracy rarely affected even in a case where a stress resulting from a tilting component is applied to the shaft member via the operated member" (described in Paragraph [0005] of Reference 1), Reference 1 proposes a rotation angle detecting device in which "rotation axes of the pivoting member and the shaft member are linked to each other in a tiltable manner and an alignment mechanism is disposed so as to hold the rotation axis of the pivoting member coaxially with a fixed axis of the housing regardless of tilting of the shaft member" (described in Paragraph [0006]), and it is described therein that the "rotation angle detecting device can be used as a rotation angle detecting device that detects the oscillation angle of the operated member which is operated to pivot by an automobile steering pedal or the like" (described in Paragraph [0030]). In Reference 2 described above, the placement of the magneto-electric conversion elements is specified (described in Paragraph [0016] of Reference 2) for the purpose of "providing the rotation angle sensor that achieves cost reduction and structural simplification with the small magneto-electric conversion elements, allows the magneto-electric conversion element to be placed even at a position spaced apart from the center of the disk magnet, and is capable of suppressing an angular error attributable to a relative positional deviation between the magneto-electric conversion element and the disk magnet" (described in Paragraph [0015]).

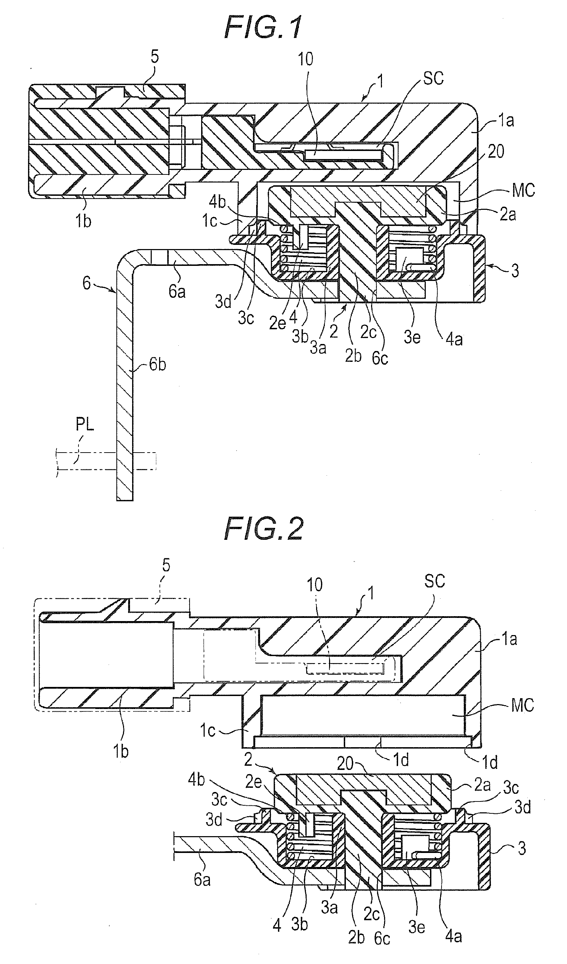

According to the specific configuration of the rotation angle detecting device described in Reference 1, the housing has a housing main body that has a magneto-sensitive unit, a connector portion, and an accommodating portion and a cover member that closes the accommodating portion in a sealing form, a pair of Hall ICs are stored by insert molding in a boss portion formed to protrude from the housing main body, and the shaft member is pivotally supported by a bearing formed in the cover member as disclosed in Fig. 2 of Reference 1 and described in Paragraphs [0013] to [0016] of Reference 1. In addition, the pivoting member that is tiltably linked to the shaft member has a yoke main body and a magnet holder formed of a non-magnetic body material, and a permanent magnet is stored and supported inside the magnet holder.

In the device that is described in Reference 1, the detection element that has the pair of Hall ICs is insert-molded in the boss portion of the housing and the housing and the cover member are fixed to each other by laser welding or the like while the pivoting member is accommodated in the housing along with the detection element and the shaft member is pivotally supported by the cover member. Accordingly, the detection element is accommodated with the pivoting member (permanent magnet) and the shaft member in a space formed by the housing and the cover member, and the insert molding of the detection element toward the boss portion of the housing is essential for the detection element to be waterproof. In addition, it is difficult to bond the housing and the cover member to each other in a liquid-tight manner according to the above-described configuration.

The rotation angle sensor described in Reference 2 is configured such that the X and Y Hall elements and the disk magnet are accommodated in an angle sensor module without exception and the angle sensor module is fixed to an angle sensor fixing portion as disclosed in Fig. 1 of Reference 2 and described in Paragraphs [0020] to [0023] of Reference 2. Therein, however, nothing in particular is described regarding how to ensure waterproofness of the X and Y Hall elements which are magneto-electric conversion elements, and a problem similar to what is described above still remains.

### SUMMARY

Thus, a need exists for a rotation angle detecting device including a magnet member placed in a shaft member to face a magneto-electric conversion element, detecting a rotation angle of the shaft member in response to a relative rotation of the magnet member with respect to the magneto-electric conversion element, and capable of ensuring waterproofness of the magneto-electric conversion element with a simple structure.

An aspect of this disclosure provides a rotation angle detecting device configured to be provided with a magnet member placed in a shaft member to face a magneto-electric conversion element and detecting a rotation angle of the shaft member in response to a relative rotation of the magnet member with respect to the magneto-electric conversion element, the rotation angle detecting device including a housing accommodating the magneto-electric conversion element, a supporting member connected to the housing and rotatably supporting the shaft member, and a connector member electrically connected to the magneto-electric conversion element, in which the housing has a main body portion where an element chamber accommodating at least the magneto-electric conversion element is formed and a joint integrally formed with the main body portion and connected to the connector member, and the connector member is fitted into and connected to the joint in a liquid-tight manner. The rotation angle detecting device may further include a return spring having one end locked to the shaft member and the other end locked to the supporting member.

In the rotation angle detecting device described above, the housing may further have a magnet chamber formed separately from the element chamber in the main body portion and may be configured to be connected to the supporting member in a state where the magnet member is accommodated in the magnet chamber. The housing may further have a cylindrical portion integrally extending from the main body portion and the magnet chamber may be formed by the cylindrical portion being connected to the supporting member.

In the rotation angle detecting device described above, the supporting member may have a bearing portion rotatably supporting the shaft member and an annular recessed portion formed around the bearing portion, and the return spring may be configured to be accommodated in the annular recessed portion. The rotation angle detecting device may further include a driving lever having one end locked to the shaft member, having the other end extending in a radial direction of the shaft member, and driving the shaft member to rotate against a biasing force of the return spring.

The aspect of this disclosure achieves the following effects based on the above-described configuration. The rotation angle detecting device according to this disclosure is configured to be provided with the magnet member placed in the shaft member to face the magneto-electric conversion element and detect the rotation angle of the shaft member in response to the relative rotation of the magnet member with respect to the magneto-electric conversion element, the rotation angle detecting device includes the housing accommodating the magneto-electric conversion element, the supporting member connected to the housing and rotatably supporting the shaft member, and the connector member electrically connected to the magneto-electric conversion element, the housing has the main body portion where the element chamber accommodating at least the magneto-electric conversion element is formed and the joint integrally formed with the main body portion and connected to the connector member, and the connector member is configured to be fitted into and connected to the joint in a liquid-tight manner, and thus the waterproofness of the magneto-electric conversion element can be ensured easily and appropriately with a simple structure. In addition, the magnet member can be easily returned to an initial position of the relative rotation with respect to the magneto-electric conversion element insofar as the rotation angle detecting device further includes a return spring having one end locked to the shaft member and the other end locked to the supporting member.

In the rotation angle detecting device described above, the magneto-electric conversion element can be completely separated from the pivoting magnet member and the waterproofness can be ensured insofar as the housing further has the magnet chamber formed separately from the element chamber in the main body portion and is connected to the supporting member in a state where the magnet member is accommodated in the magnet chamber. A joint between the housing and the supporting member can be minimized and the waterproofness can be ensured with greater ease insofar as the housing further has the cylindrical portion integrally extending from the main body portion and the magnet chamber is formed by the cylindrical portion being connected to the supporting member.

According to the rotation angle detecting device described above, the entire device can be formed to be compact in size and assembly of the return spring with respect to the supporting member can be facilitated insofar as the supporting member has the bearing portion rotatably supporting the shaft member and the annular recessed portion formed around the bearing portion, and the return spring is configured to be accommodated in the annular recessed portion. In addition, the entire device can be formed to be further compact in size insofar as the rotation angle detecting device further includes the driving lever having one end locked to the shaft member, having the other end extending in the radial direction of the shaft member, and driving the shaft member to rotate against the biasing force of the return spring.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross-sectional view of a rotation angle detecting device according to an embodiment disclosed here;
Fig. 2 is a cross-sectional view separately illustrating a housing and a supporting member provided for the embodiment disclosed here;
Fig. 3 is a plan view illustrating the supporting member provided for the embodiment disclosed here;
Fig. 4 is a plan view illustrating a state where a shaft member is mounted on the supporting member provided for the embodiment disclosed here;
Fig. 5 is a perspective view illustrating the shaft member provided for the embodiment disclosed here;
Fig. 6 is a perspective view illustrating the rotation angle detecting device according to the embodiment disclosed here; and
Fig. 7 is an exploded perspective view illustrating the rotation angle detecting device according to the embodiment disclosed here.

### DETAILED DESCRIPTION

Hereinafter, a preferred embodiment disclosed here will be described with reference to accompanying drawings. Figs. 1 to 7 relate to the embodiment disclosed here, which is a non-contact rotation angle detecting device that detects a rotation angle of a shaft member 2 in response to a relative rotation of a magnet member 20 with respect to a magneto-electric conversion element 10 and serves to detect an operation amount of an external mechanism such as a brake pedal. The magneto-electric conversion element 10 is configured to have, for example, a pair of Hall ICs. A supporting member 3 that rotatably supports the shaft member 2 is connected to a housing 1 that accommodates the magneto-electric conversion element 10. One end of a coil spring that constitutes a return spring 4 is locked to the shaft member 2, and the other end of the coil spring is locked to the supporting member 3. When a connector member 5 such as a waterproof connector is connected to the housing 1, the magneto-electric conversion element 10 is electrically connected to the connector member 5 and the magneto-electric conversion element 10 is sealed against the outside. Then, a driving lever 6 is fixed to the shaft member 2 and is placed to be engaged with a pedal lever PL to constitute a brake pedal sensor. Hereinafter, each constituting member will be described in detail.

The housing 1 is formed of a synthetic resin. As illustrated in Figs. 1 and 2, the housing 1 has a main body portion 1 a and a joint 1 b. An element chamber SC is formed in the main body portion 1 a. At least the magneto-electric conversion element 10 is accommodated in the main body portion 1a. In addition, a magnet chamber MC is formed separately from the element chamber SC in the main body portion 1 a. The main body portion 1 a is connected to the supporting member 3, which is formed of a synthetic resin, such that the magnet member 20 is accommodated at a position in the magnet chamber MC which faces the magneto-electric conversion element 10. The joint 1 b is integrally formed with the main body portion 1 a, and the joint 1 b is configured such that the element chamber SC communicates with an external space only via the joint 1 b. Accordingly, when the connector member 5 is fitted into the joint 1 b in a liquid-tight manner, the element chamber SC becomes a sealed space. The housing 1 according to this embodiment has a cylindrical portion 1 c that integrally extends from the main body portion 1 a. When laser welding is performed over the entire circumference of the cylindrical portion 1 c, for example, the cylindrical portion 1 c is connected to the supporting member 3 in close contact with the supporting member 3 and the magnet chamber MC is shielded from the external space.

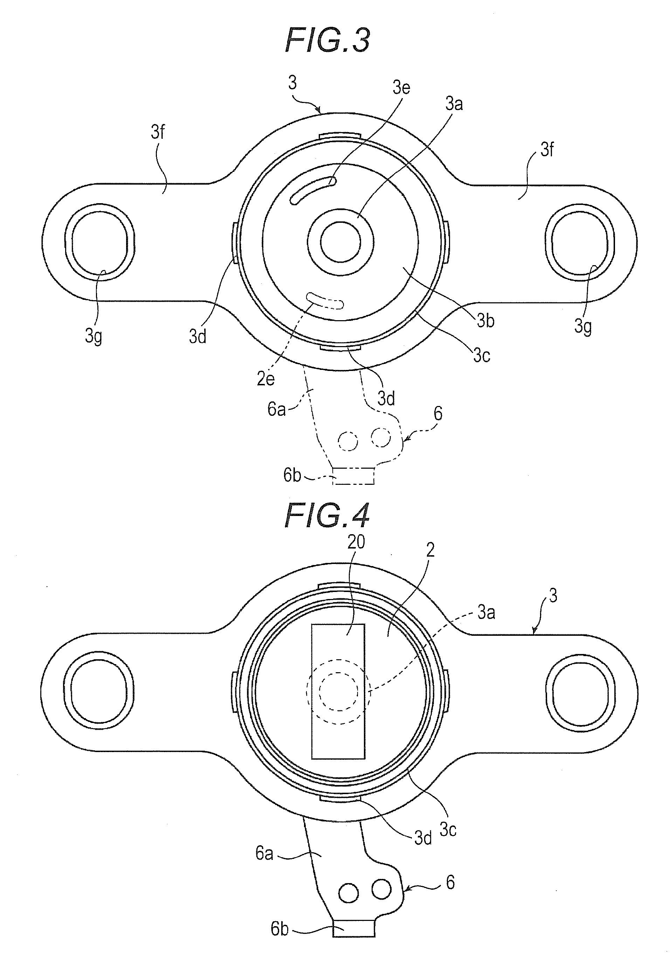

As illustrated in Figs. 3 and 4, a bearing portion 3a that rotatably supports the shaft member 2 is formed in the supporting member 3 and an annular recessed portion 3b is formed around the bearing portion 3a. An annular vertical wall 3c is formed around the annular recessed portion 3b. The vertical wall 3c is configured to be fitted into an inner peripheral surface of the cylindrical portion 1 c of the housing 1. A plurality of (four in this embodiment) projections 3d are formed to extend from the vertical wall 3c for positioning during the fitting of the vertical wall 3c into the cylindrical portion 1 c. Recessed portions 1 d that are fitted into the projections 3d are formed in the inner peripheral surface of the cylindrical portion 1 c. A locking projection 3e, which has an arc shape in plan view, is formed to extend in the annular recessed portion 3b so as to lock an end portion 4a of the return spring 4. A pair of flanged portions 3f and 3f are formed outside the vertical wall 3c to extend in directions away from each other. Mounting holes 3g and 3g are formed in the respective flanged portions 3f and 3f.

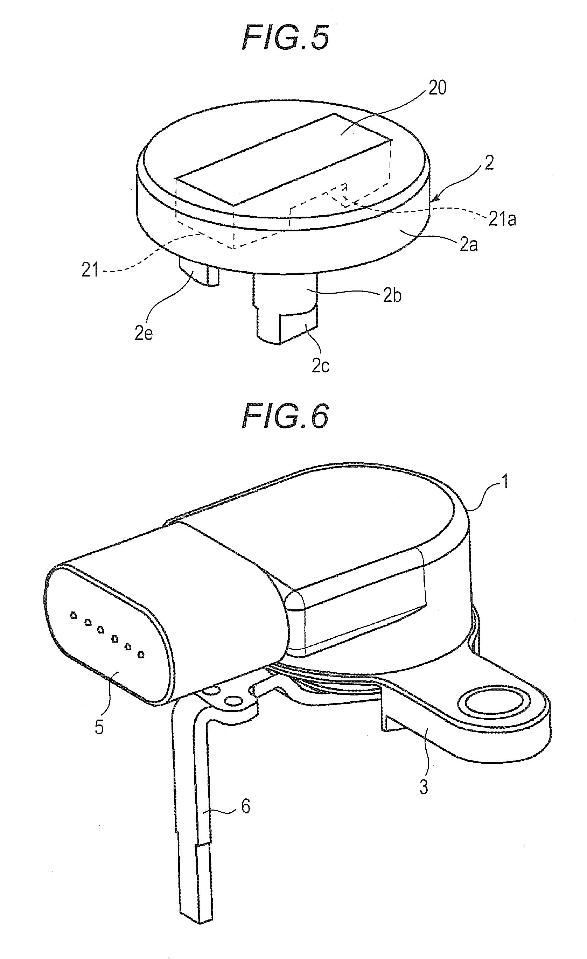

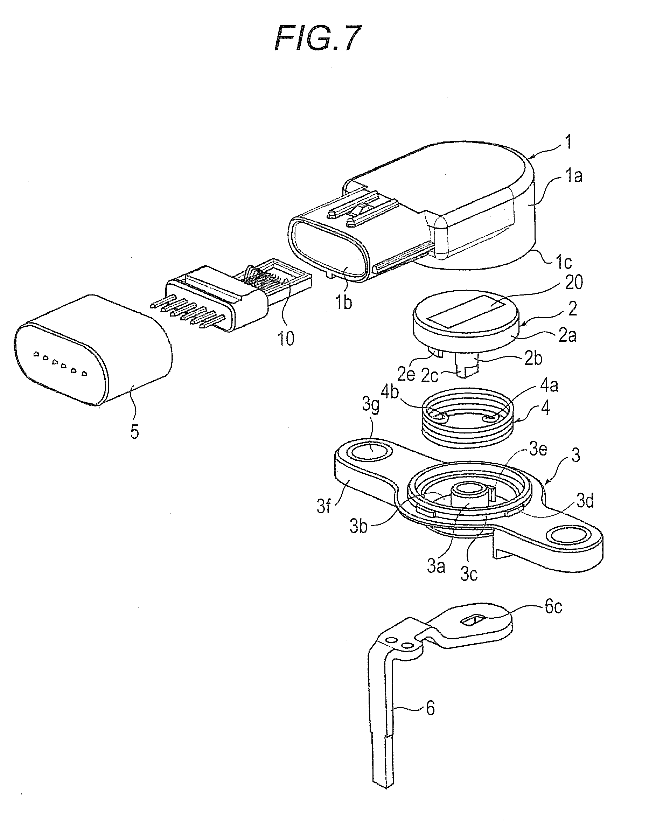

As illustrated in Fig. 5, the shaft member 2 has a disk portion 2a and a shaft portion 2b integrally formed with each other by a synthetic resin, and the magnet member 20 is embedded in the disk portion 2a. An engaging portion 2c that has a so-called dihedral width is formed at a tip of the shaft portion 2b and is configured to be engageable with an engaging hole 6c (refer to Fig. 7) which is formed in the driving lever 6 and has a dihedral width. An arc-shaped locking projection 2e is formed to extend from a lower surface of the disk portion 2a of the shaft member 2 so as to lock an end portion 4b of the return spring 4. The locking projection 2e has the plan-view positional relationship that is illustrated in Fig. 3 with respect to the locking projection 3e of the supporting member 3.

The driving lever 6 has an extending portion 6a that extends in a radial direction of the shaft member 2 and an engaging portion 6b that extends in parallel to an axis of the shaft member 2 and is engaged with the external mechanism (pedal lever PL). The driving lever 6 is configured to drive the shaft member 2 to rotate against a biasing force of the return spring 4 with one end of the extending portion 6a fixed to the shaft member 2 and the other end of the extending portion 6a extending in the radial direction of the shaft member 2 (as a result of the engagement between the engaging hole 6c and the engaging portion 2c).

The magnet member 20 has a permanent magnet 21 as a rectangular parallelepiped body that is placed on a plane which is orthogonal to an axis of the shaft portion 2b. In the permanent magnet 21 that is the rectangular parallelepiped body, a groove 21 a is formed in a direction orthogonal to the axis of the shaft portion 2b. This groove 21 a is formed in a surface on the side opposite to a surface facing the magneto-electric conversion element 10, includes the center of one surface of the rectangular parallelepiped body, and is formed to extend in parallel to a short-side lateral surface. The width of the groove 21 a is set to one-third of the length of the rectangular parallelepiped body on a long side. The magnet member 20 is magnetized in a longitudinal direction of the groove 21 a with respect to the permanent magnet 21.

The magneto-electric conversion element 10 in the housing 1 has the pair of Hall ICs (not illustrated). A change in a magnetic field angle by the permanent magnet 21 that depends on the rotation of the shaft member 2, a change in the rotation angle of the magnet member 20 eventually, is detected by the pair of Hall ICs, and a voltage output in accordance with the magnetic field angle is supplied to external equipment (not illustrated) via the connector member 5.

An assembly process for the rotation angle detecting device will be described with reference to Fig. 7. Firstly, the return spring 4 is accommodated in the annular recessed portion 3b of the supporting member 3 and the end portion 4a of the return spring 4 is locked to the locking projection 3e. Then, the state that is illustrated in the lower section of Fig. 2 is achieved when the disk portion 2a of the shaft member 2 is accommodated in the annular vertical wall 3c with the shaft portion 2b of the shaft member 2 accommodated in the bearing portion 3a of the supporting member 3 and the end portion 4b of the return spring 4 locked to the locking projection 2e of the shaft member 2. In this state, the housing 1 that is illustrated in the upper section of Fig. 2 is connected to the supporting member 3. In other words, the recessed portions 1 d that are formed in the cylindrical portion 1 c of the housing 1 are fitted into the respective projections 3d that are formed on the vertical wall 3c of the supporting member 3, and the cylindrical portion 1 c is fitted into the vertical wall 3c at a predetermined position. Then, laser welding is performed over the entire circumference of the cylindrical portion 1 c. In this manner, the housing 1 is connected to the supporting member 3 in close contact with the supporting member 3, and the magnet chamber MC that is illustrated in Fig. 1 is formed.

Then, the magneto-electric conversion element 10 is accommodated in the main body portion 1 a of the housing 1 for holding at a position facing the magneto-electric conversion element 10, the connector member 5 is electrically connected to the pair of Hall ICs (not illustrated) constituting the magneto-electric conversion element 10 in the main body portion 1 a, the connector member 5 is fitted into the joint 1 b in a liquid-tight manner, and the element chamber SC that is the sealed space is formed as illustrated in Fig. 1. In addition, the engaging hole 6c of the driving lever 6 is engaged with and connected to the engaging portion 2c of the shaft member 2, and the shaft member 2 is driven to rotate in response to an oscillation of the driving lever 6.

As illustrated in Fig. 1, the rotation angle detecting device that has the above-described configuration is placed such that the engaging portion 6b of the driving lever 6 is engaged with the pedal lever PL. In this case, the driving lever 6 is in a state of being pressed to the pedal lever PL by the biasing force of the return spring 4, and thus the pedal lever PL is held at an initial position that is set in advance. When the pedal lever PL is operated in this state, the driving lever 6 oscillates about the axis of the shaft member 2 (shaft portion 2b) and the shaft member 2 is driven to rotate against the biasing force of the return spring 4. Accordingly, the magnet member 20 that is embedded in the disk portion 2a of the shaft member 2 rotates about the axis of the shaft portion 2b. In other words, the magnet member 20 that is supported by the supporting member 3 (which is integral with the housing 1) rotates relative to the magneto-electric conversion element 10 accommodated and supported in the housing 1, and the change in the magnetic field angle by the permanent magnet 21 that depends on the change in the rotation angle of the magnet member 20 is detected by the pair of Hall ICs in the magneto-electric conversion element 10. Then, the voltage output in accordance with the magnetic field angle is supplied to the external equipment (not illustrated) via the connector member 5.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed. Accordingly, it is expressly intended that all such variations, changes and equivalents which fall within the scope of the present invention as defined in the claims, be embraced thereby.

## Claims

1. A rotation angle detecting device provided with a magnet member (20) placed in a shaft member (2) to face a magneto-electric conversion element (10) and detecting a rotation angle of the shaft (2) member in response to a relative rotation of the magnet member (20) with respect to the magneto-electric conversion element (10), the rotation angle detecting device comprising:
a housing (1) accommodating the magneto-electric conversion element (10);
a supporting member (3) connected to the housing (1) and rotatably supporting the shaft member (2); and
a connector member (5) electrically connected to the magneto-electric conversion element (10),
wherein the housing (1) includes a main body portion (1 a) where an element chamber (SC) accommodating at least the magneto-electric conversion element (10) is formed and a joint (1 b) integrally formed with the main body portion (1 a) and connected to the connector member (5), and
the connector member (5) is fitted into and connected to the joint (1 b) in a liquid-tight manner.

2. The rotation angle detecting device according to claim 1, further comprising a return spring (4) having one end locked to the shaft member (2) and the other end locked to the supporting member (3).

3. The rotation angle detecting device according to claim 1 or 2,
wherein the housing (1) further includes a magnet chamber (MC) formed separately from the element chamber (SC) in the main body portion (1a) and is connected to the supporting member (3) in a state where the magnet member (20) is accommodated in the magnet chamber (MC).

4. The rotation angle detecting device according to claim 3,
wherein the housing (1) further includes a cylindrical portion (1 c) integrally extending from the main body portion (1 a) and the magnet chamber (MC) is formed by the cylindrical portion (1 c) being connected to the supporting member (3).

5. The rotation angle detecting device according to any one of claims 2 to 4, wherein the supporting member (3) includes a bearing portion (3a) rotatably supporting the shaft member (2) and an annular recessed portion (3b) formed around the bearing portion (3a), and the return spring (4) is accommodated in the annular recessed portion (3b).

6. The rotation angle detecting device according to any one of claims 2 to 5, further comprising a driving lever (6) having one end locked to the shaft member (2), having the other end extending in a radial direction of the shaft member (2), and driving the shaft member (2) to rotate against a biasing force of the return spring (4).
